# EUROPEAN PATENT SPECIFICATION

(11) **EP 2 696 249 B1**
(45) Date of publication and mention of the grant of the patent: **09.03.2016**
(21) Application number: 13187276.4
(22) Date of filing: 25.08.2010
(51) Int. Cl.: G05B 19/042, G05B 9/03, G06F 11/00

(54) **Processor Connectivity**
Prozessorkonnektivität
Connectivité Entre Processeurs

(30) Priority: 29.07.2010 US 368690 P
(43) Date of publication of application: 12.02.2014
(62) Divisional of application: 10173985.2
(73) Proprietor: Rockwell Automation Limited, Milton Keynes Buckinghamshire MK11 3DR (GB)
(72) Inventor: Jones, Ian, West Mersea Essex CO5 8RS (GB); Murrell, Shelby, Dripping Springs, TX 78620 (US); Meagher, Thomas, deceased (US)
(74) Representative: Williams, Michael David

(56) References cited:
- EP-A1- 2 085 839
- EP-A2- 0 434 986
- US-A- 5 892 926
- US-A1- 2001 025 352
- US-A1- 2006 174 051
- US-A1- 2009 175 283
- "PHYTER (r) Design & Layout", National Semiconductor Corporation , 29 April 2008 (2008-04-29), XP002607456, Retrieved from the Internet: URL:http://www.national.com/an/AN/AN-1469. pdf [retrieved on 2010-10-28]
- "PCI Express PHY", NXP B.V. , November 2007 (2007-11), XP002607457, Retrieved from the Internet: URL:http://ics.nxp.com/literature/leaflets /interface/pdf/px1011.pdf [retrieved on 2010-10-28]
- "ZLAN-36 Application of the CESoP ProcessorsMAC-to-MAC Connections", Zarlink Semiconductor , September 2006 (2006-09), pages 1-10, XP002718208, Retrieved from the Internet: URL:http://pdf.datasheetarchive.com/indexe rfiles/Datasheets-SW22/DSASW00422267.pdf [retrieved on 2013-12-19]

## Description

### BACKGROUND

### a. Field of the Invention

This invention relates to processor connectivity, in particular in an Industrial Process Control System suitable for:
Emergency Shutdown systems
Critical process control systems
Fire and Gas detection and protection systems
Rotating machinery control systems
Burner management systems
Boiler and furnace control systems
Distributed monitory and control systems

Such control systems are applicable to many industries including oil and gas production and refining, chemical production and processing, power generation, paper and textile mills and sewage treatment plants.

### b. Related Art

In industrial process control systems, fault tolerance is of utmost importance. Fault tolerance is the ability to continue functioning safely in the event of one or more failures within the system.

Fault tolerance may be achieved by a number of different techniques, each with its specific advantages and disadvantages

An example of a system which provides redundancy is a Triple Modular Redundancy (TMR) system. Using TMR, critical circuits are triplicated and perform identical functions simultaneously and independently. The data output from each of the three circuits is voted in a majority-voting circuit, before affecting the system's outputs. If one of the triplicated circuits fails, its data output is ignored. However, the system continues to output to the process the value (voltage, current level, or discrete output state) that agrees with the majority of the functional circuits. TMR provides continuous, predictable operation.

However, TMR systems are expensive to implement if full TMR is not actually a requirement, and it is desirable to utilise an architecture which provides flexibility so that differing levels of fault tolerance can be provided depending upon specified system requirements.

Another approach to fault tolerance is the use of hot-standby modules. This approach provides a level of fault tolerance whereby the standby module maintains system operation in the event of module failure. With this approach there may be some disruption to system operation during the changeover period if the modules are not themselves fault-tolerant.

Fault tolerant systems ideally create a Fault Containment Region (FCR) to ensure that a fault within the FCR boundary does not propagate to the remainder of the system. This enables multiple faults to co-exist on different parts of a system without affecting operation.

Fault tolerant systems generally employ dedicated hardware and software test and diagnostic regimes that provide very fast fault recognition and response times to provide a safer system.

Safety control systems are generally designed to be 'fail-operational/fail-safe'. Fail operational means that when a failure occurs, the system continues to operate: it is in a fail-operational state. The system should continue to operate in this state until the failed module is replaced and the system is returned to a fully operational state.

An example of fail safe operation occurs, for example if, in a TMR system, a failed module is not replaced before a second failure in a parallel circuit occurs, the second failure should cause the TMR system to shut down to a fail-safe state. It is worth noting that a TMR system can still be considered safe, even if the second failure is not failsafe, as long as the first fault is detected and communicated, and is itself failsafe.

This invention provides a technique whereby replicated processor modules can be connected together in a simpler way than is provided for by conventional physical layer circuitry.

The problem with conventional physical layer circuitry for connecting Ethernet ports together is that they require a separate integrated circuit known as a "PHY" chip. These chips allow connection of long distance Ethernet communicators, and can be used for short distance connections too. However, use of PHY chip is expensive, as well as using more power and circuit board area.

EP 2085839 relates to a method and apparatus for interconnecting modules in an industrial process control system. A plurality of processors and a plurality of input/output modules in which each processor has a unidirectional command line which is connected to a plurality of input output modules is provided. Each input output module has a unidirectional response line which is connected to a plurality of processors.

US 2006/0174051 is concerned with a system for handling data for process with a primary controller and a redundant controller. The primary controller includes a primary processor that is operable to perform tracking data tasks by using a low speed bus to cooperate with a tracker controller for storage of tracking data in a tracker memory.

"PHYTER Design & Layout", National Semiconductor Corporation, 29 April 2008 (2008-04-29"), is a design and layout guide for a physical layer device from National Semiconductor Corporation.

"PCI Express PHY", NXP B.V.M November 2007 (2007-11). Is concerned with a PCI express transceiver for use with digital ASICs and FPGAs.

US2001/0025352 is concerned with a processor device including a clock generation unit, a process unit, a main memory, a processor bus and a bus control device having an interface for a cross over bus to at least one further processor device.

EP 0434986 is concerned with modules which are intended for use in an automation system. The modules can be adapted to different conditions of the process to be controlled by the selection of specific operating parameters.

This invention provides an alternative method of connecting processors which are in close physical proximity to each other.

The invention also provides an improved connectivity technique whereby processors may be replaced without configuration changes to the system network structure or require manual reconfiguration intervention.

### SUMMARY OF THE INVENTION

According to the invention there is provided an apparatus for industrial process control according to claim 1.

In a preferred embodiment each of said plurality of the replicated processing modules is connected to another one of said plurality of replicated processing modules via an RMII interface.

Preferably a processing module comprises a processor having an RMII interface and a buffer, the buffer comprising means for generating a differential signal for transmission from an RMII signal received from said processor.

In one embodiment a processing module comprises a processor having an RMII interface and a buffer, the buffer comprising means for receiving a differential signal and generating therefrom an RMII signal for sending to said processor.

A processing module may comprise a processor having an RMII interface and a buffer, the buffer comprising means to clock received data into the buffer in dependence upon a received clock signal and to provide said data to the processor in dependence upon a clock signal generated by said processor.

Advantageously the processing modules slot into a backplane, and in which the backplane assembly comprises at least one processor having a store storing network specific information for each of said plurality of replicated processing modules.

The network specific information may comprise address information.

### BRIEF DESCRIPTION OF THE DRAWINGS

Embodiments of the invention will now be described, by way of example only, with reference to the accompanying drawings, in which:
Figure 1 is an illustration showing the architecture of a distributed industrial process control system which uses the apparatus and method of the present invention;
Figure 2 illustrates schematically a controller of the industrial process control system illustrated in Figure 1;
Figure 3 illustrates a possible configuration of a controller;
Figure 4 shows various options for an input assembly and output assembly of Figure 3
Figure 5 shows one possible configuration implementing a two out of three voting strategy;
Figure 6 illustrates a second possible configuration for a two out of three voting strategy;
Figure 7 illustrates processing modules connected together via high speed serial links;
Figures 8a and 8b illustrate possible network topologies connecting three processing modules; and
Figure 9 illustrates a back plane according to one embodiment of the invention.

### DETAILED DESCRIPTION

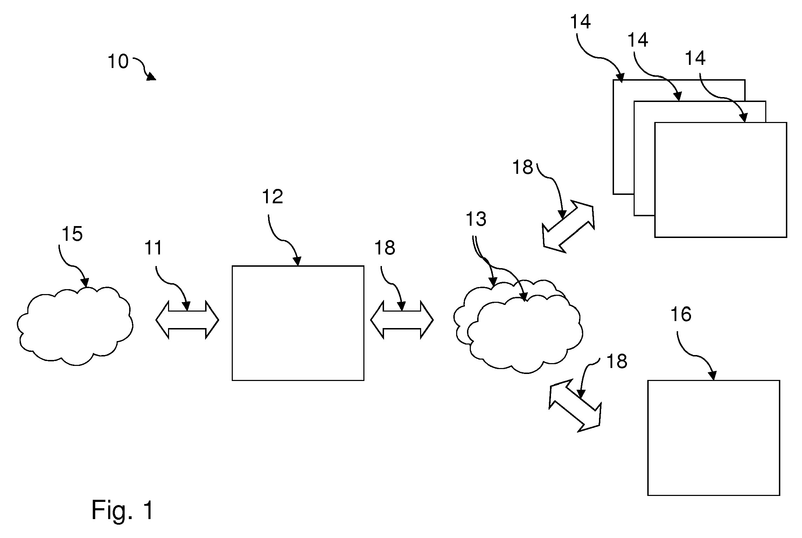

In the Industrial Process Control System shown in Figure 1, a distributed architecture is designed to be used in different SIL (Safety Integrity Level) environments, so that if a high SIL is required it can be provided, but if a low SIL is all that is needed the system can be reduced in complexity in order to reduce unnecessary extra costs.

An exemplary Industrial Process Control System 10, comprises a workstation 12, one or more controllers 14 and a gateway 16. The workstation 12 communicates with the controllers 14 and the gateway 16 via Ethernet connections 18 to one or more control networks 13. Multiple Ethernet connections 18 provide redundancy to improve fault tolerance. The workstation 12 may be connected via a conventional Ethernet connection 11 to another external network 15.

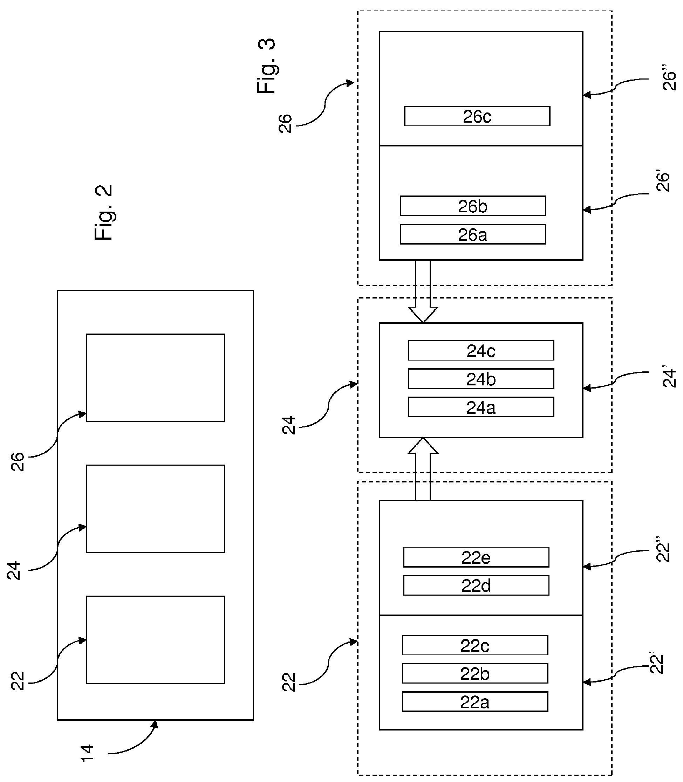

A controller 14 will now be described in more detail with reference to Figures 2 and 3.

Figure 2 illustrates a schematic diagram of the controller 14 comprising an input assembly 22, a processor assembly 24 and an output assembly 26. In this schematic illustration the input assembly 22 and output assembly 26 are on different backplanes but they may equally well share a single backplane.

Assemblies 22, 24, 26 are created from one or more communications backplane portions which have three slots to accommodate up to three modules together with termination assemblies which have one, two or three slots, and which interface to field sensors and transducers. A termination assembly may straddle two contiguous backplane portions. A module comprises a plug in card with multiple connectors for plugging onto a communications backplane and a termination assembly.

It will be appreciated that having three slots in a communications backplane portion is one design option and other design options with greater (or fewer) slots are possible without departing from the scope of the invention as defined in the appended aspects.

Figure 3 illustrates a possible physical configuration of the controller 14. In this embodiment of the invention, the input assembly 22, output assembly 26 and processor assembly 24 are physically separated from one another by grouping the modules of different types onto separate communications backplanes.

In the example shown, the input assembly 22 comprises two communications backplane portions, 22', 22". The first backplane portion 22' has a triplex input termination assembly and three input modules 22a, 22b, 22c, the second backplane portion 22" has a duplex input termination assembly 22" and two input modules 22d, 22e. The processor assembly 24 comprises a single processor backplane portion 24' having three processor modules 24a, 24b and 24c. The output assembly 26 comprises two backplane portions 26', 26". The first backplane portion 26' has a duplex output termination assembly with two output modules 26a, 26b and the second backplane portion 26" has a simplex output termination assembly with a single output module 26c.

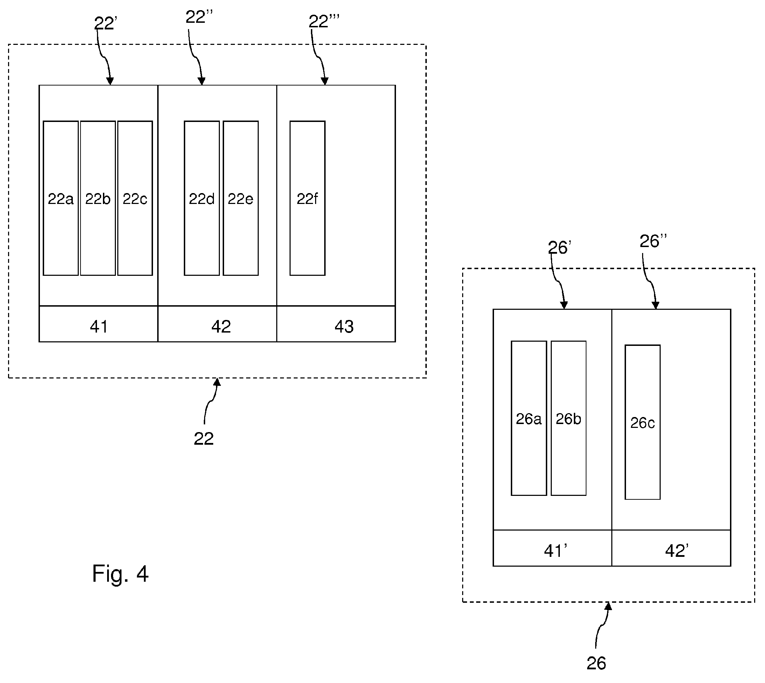

The flexibility of the input assembly 22, will now be described, in more detail with reference to Figure 4.

An input assembly 22 comprises one or more backplane portions and termination assemblies 22' 22" 22'" etc. For example, a triplex portion 22' having three modules 22a, 22b, 22c might be used for high availability requirement, a duplex portion 22" having two modules 22d, 22e might be provided for fault tolerant applications and a simplex portion 22'" with a single modules 22f might be provided for failsafe applications. The termination assemblies may be provided with different types of field conditioning circuits. For example assembly 22' may be provided with a 24V DC field conditioning circuit 41, assembly 22" may be provided with a 120V DC field conditioning circuit 42 and assembly 22'" may be provided with a 4-20mA field conditioning circuit 43. Similarly possible configurations are shown for an output assembly 26. It will be appreciated that numerous configurations of backplane portions and termination assemblies with various different numbers of modules and various different types of field conditioning circuits are possible and the invention is not limited to those shown in these examples.

Where an assembly provides more than one module for redundancy purposes it is possible to replace a failed module with a replacement module whilst the industrial process control system is operational which is also referred to herein as online replacement (i.e. replacement is possible without having to perform a system shutdown). Online replacement is not possible for a simplex assembly without interruption to the process. In this case various "hold last state" strategies may be acceptable or a sensor signal may also be routed to a different module somewhere else in the system.

The processor assembly configures a replacement processor module using data from a parallel module before the replacement module becomes active.

The field conditioning circuits 41, 42, 43 transform a signal received from a sensor monitoring industrial process control equipment to a desired voltage range, and distribute the signal to the input modules as required. Each field conditioning circuit 41, 42, 43 is also connected to field power and field return (or ground) which may be independently isolated on a channel by channel basis from all other grounds, depending on the configuration of the input termination assembly. Independent channel isolation is the preferred configuration because it is the most flexible. The field conditioning circuits 41, 42, 43 comprise simple non active parts and are not online replaceable.

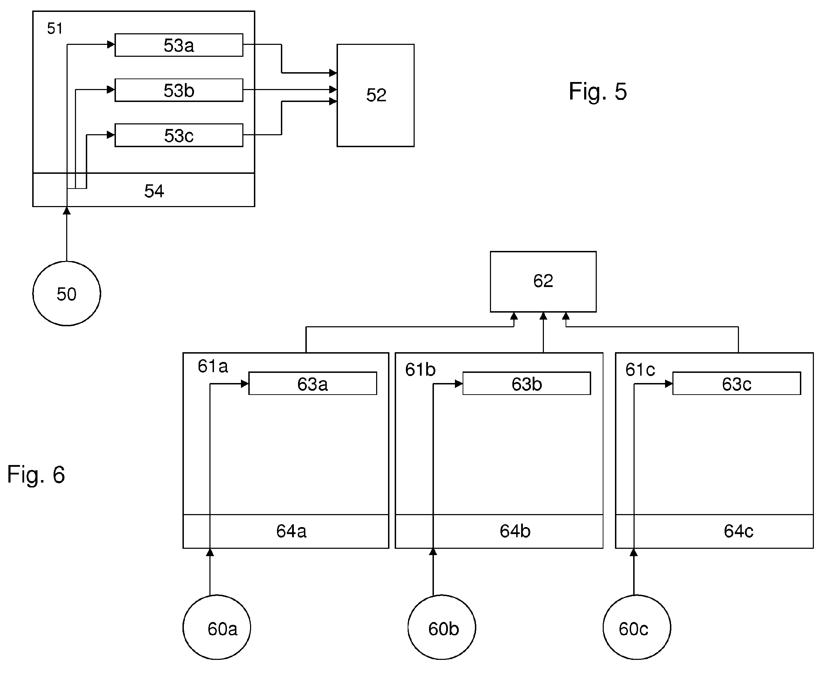

Figure 5 and Figure 6 illustrate the flexibility of the architecture described herein showing different configurations for a triplex system for generating a signal with a high availability requirement. Referring to Figure 5, a three module input assembly 51 receives a signal from a sensor 50 via a field conditioning circuit in termination assembly 54. The field conditioning circuit 54 transforms the signal to a desired voltage range and distributes the signal to three replicated input modules 53a, 53b, 53c. Each input module processes the signal and the results are sent to a two out of three voter 52 to generate a result signal in dependence thereon.

Referring to Figure 6, replicated sensors 60a, 60b, 60c each send a signal to respective simplex assemblies 61 a, 61 b, 61 c via respective field conditioning circuits in termination assemblies 64a, 64b, 64c. Each input module 63a, 63b, 63c processes the signal and sends an output to a two out of three voter 62 to generate a signal in dependence thereon. It will be appreciated that many variations and configurations are possible in addition to those illustrated here.

Conventionally processor modules 24a, 24b, 24c are connected to a processor communications backplane using conventional physical layer circuitry. However in a fault tolerant Industrial Process Control System it is desirable if the processor modules can be connected together without the need for specialized integrated circuits.

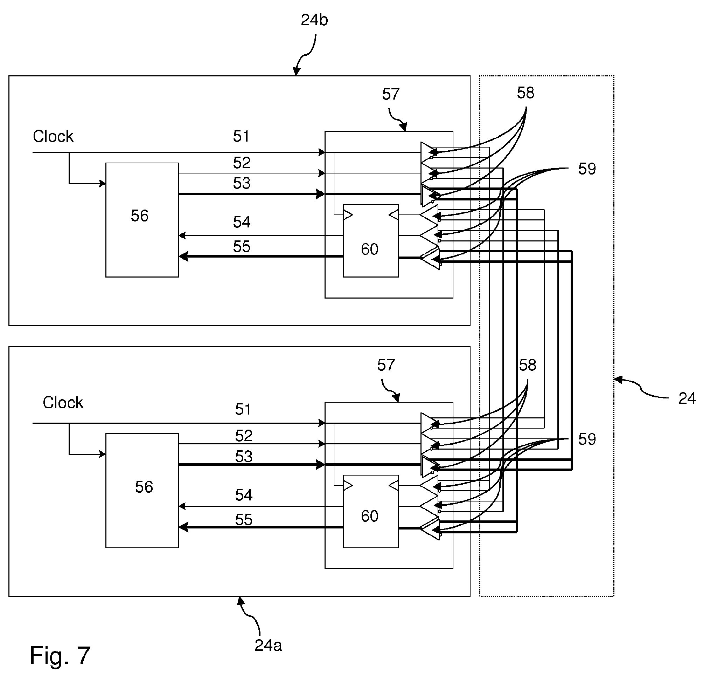

Figure 7 shows an embodiment of the invention for connecting replicated processor modules in an Industrial Process Control System. In Figure 7 only two processor modules 24a, 24b are shown for clarity.

The Processor modules utilise the Reduced Media Independent Interface (RMII) connection standard.

Signals used in RMII are as follows: Signal TX_RX_CLK 51 is continuous 50 MHz Reference Clock, signal TXD [1..0] 53 transmits data bits one and zero, signal TX_EN 52 is a transmit enable signal - when high, data on TXD [1..0] 53 will be clocked to the transmitter. Signal CRS_DV 54 is a multiplexed carrier sense/ data valid signal which is multiplexed on alternate clock cycles. Signal RXD [1..0] 55 receives data bits one and zero.

The two processor modules 24a, 24b sharing a common backplane 24 are connected together via their serial Ethernet ports (100 Mbit/second) utilizing only very simple field programmable gate array (FPGA) elastic clock domain buffering logic. In each processing module 24a, 24b processor 56 is sent and receives RMII signals via an FPGA 57. In one embodiment the FPGA 57 in processing module 24a generates differential signals from signals TX_RX_CLK 51, TXD [1..0] 53 and TX_EN 52 using simple logic gates 58 in order to improve signal integrity. The signals generated by the FPGA 57 are connected to logic gates 59 in FPGA 57 in processing module 24b. Logic gates 59 generate buffer input signals in dependence upon the received differential signals. The buffer input signals are clocked into a buffer 60 in dependence upon the received TX_RX_CLK 51 generated by processor module 24a and are clocked out of the buffer in dependence upon TX_RX_CLK 51 internal to processing module 24b. It will be appreciated that signals are transmitted from processing module 24b to processing module 24a in an analogous manner.

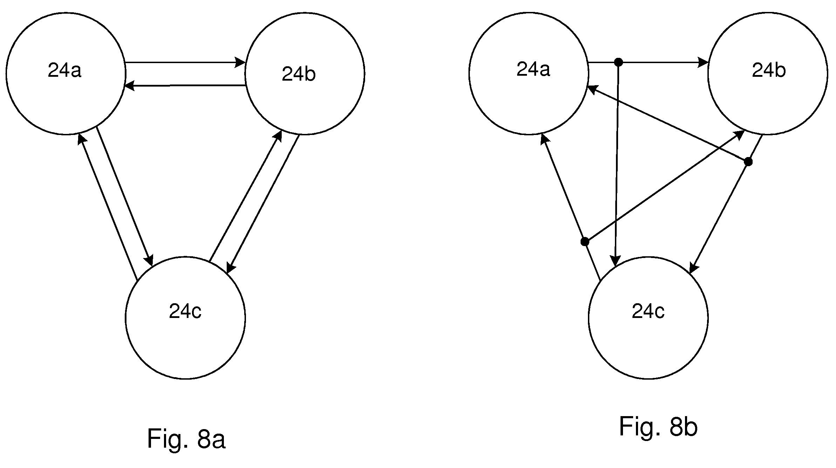

The interconnection scheme using dedicated interconnections provides for high speed data links between multiple processing modules. Connection topology between two processing modules as shown in Figure 7 is straightforward. In an embodiment with three processing modules there are two possible topologies, as illustrated in Figure 8. Both of these Inter-Processor Link (IPL) methods are provided in the preferred embodiment. The first type illustrated in Figure 8a provides point-to-point bidirectional connections between each processor module and the other two, allowing the use of high-speed serial protocols. The second type illustrate in Figure 8b provides a broadcast style topology whereby each processor module sends an output which is received by the other two. Provision of a combination of point to point bidirectional connections and broadcast style links may be extended to connect more than three processing module.

When processors 24a, 24b are to be removed from the backplane 24 it is advantageous if this can be done without configuration changes to the system network structure and without requiring manual reconfiguration intervention.

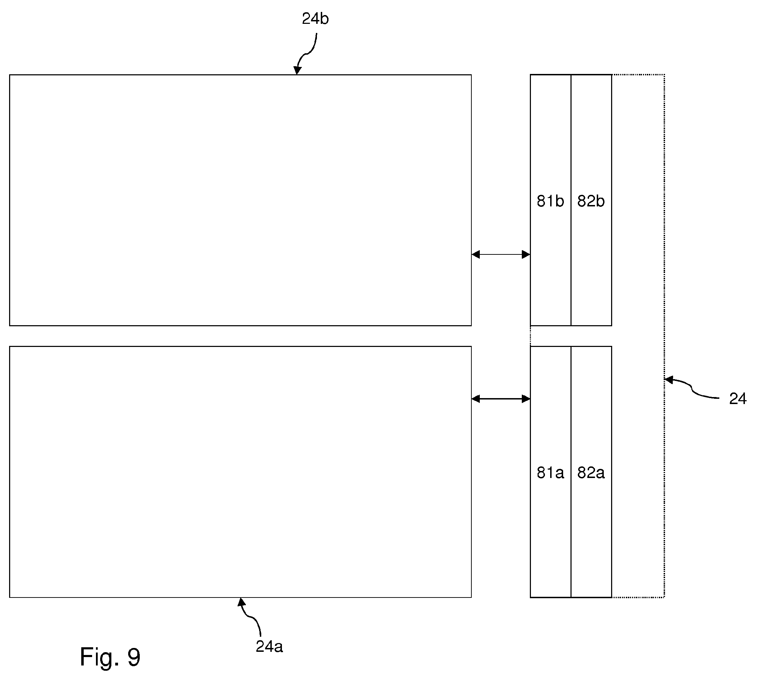

Figure 9 shows an embodiment of the invention, again showing only two processing modules for clarity. Small micro-computer processing elements 82a, 82b resident on the processor backplane 24 store all the network specific information for processing modules, 24a, 24b. This is advantageous over storing such information in the processing modules 24a, 24b themselves. This allows the processing modules 24a, 24b to be replaced without concern for their network parameters.

The processing modules 24a, 24b are connected via respective sockets 81 a, 81 b so that they may be easily removed for service independently of the backplane. The plurality of storage processors 82a, 82b typically store the media access control (MAC) addresses and internet protocol (IP) addresses that are configured for the processing module. Multiple storage processors 82a, 82b may be used to provide fault tolerance.

In one exemplary embodiment of the invention there are three processing modules per node, each of which has unique network parameters. Identical information is stored on each respective storage processor including all information required for each one of the processing modules. This allows any one of the processing modules to be plugged into any one of the backplane sockets. Each processing module is then able to extract information specific to itself.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately, or in any suitable combination.

It is to be recognized that various alterations, modifications, and/or additions may be introduced into the constructions and arrangements of parts described above without departing from the scope of the present invention as defined in the appended claims.

There are now described a number of aspects of the invention.
1. An apparatus for industrial process control comprising:
   a plurality of replicated processing modules for receiving replicated sensor input data and for producing replicated output data in which each of said plurality of replicated processing modules is connected to another one of said plurality of replicated processing modules via a dedicated high speed connection.
2. An apparatus according to aspect 1, in which each of said plurality of replicated processing modules is connected to another one of said plurality of replicated processing modules via an RMII interface.
3. An apparatus according to aspect 2, in which a processing module comprises a processor having an RMII interface and a buffer, the buffer comprising means for generating a differential signal for transmission from an RMII signal received from said processor.
4. An apparatus according to aspect 2, in which a processing module comprises a processor having an RMII interface and a buffer, the buffer comprising means for receiving a differential signal and generating therefrom an RMII signal for sending to said processor.
5. An apparatus according to aspect 2, in which a processing module comprises a processor having an RMII interface and a buffer, the buffer comprising means to clock received data into the buffer in dependence upon a received clock signal and to provide said data to the processor in dependence upon a clock signal generated by said processor.
6. An apparatus according to aspect 1, in which the processing modules slot into a backplane, and in which the backplane assembly comprises at least one processor having a store storing network specific information for each of said plurality of replicated processing modules.
7. An apparatus according to aspect 6, in which the network specific information comprises address information.

## Claims

1. An apparatus for industrial process control comprising:
at least one processing module (24a, 24b, 24c) for receiving sensor input data and for producing output data in which said at least one processing module (24a, 24b, 24c) is connected to another processing module (24a, 24b, 24c) via a dedicated connection without PHY chips;
wherein the at least one processing module (24a, 24b, 24c) is adapted to slot into a backplane (24), and the backplane comprises a respective processor (82a, 82b) for each processing module (24a, 24b, 24c), each respective processor (82a, 82b) having a store storing network specific information for at least one of said processing modules (24a, 24b, 24c).

2. An apparatus according to claim 1, in which said dedicated connection comprises an RMII interface.

3. An apparatus according to claim 2, in which the at least one processing module (24a, 24b, 24c) is adapted to send and receive RMII signals via an FPGA.

4. An apparatus according to claim 2 or 3, in which the at least one processing module (24a, 24b, 24c) comprises a processor (56) having an RMII interface and means (58) for generating a differential signal for transmission from an RMII signal received from said processor (56).

5. An apparatus according to claim 2, 3 or 4 in which the at least one processing module (24a, 24b, 24c) comprises a processor (56) having an RMII interface and means (58) for receiving a differential signal and generating therefrom an RMII signal for sending to said processor (56).

6. An apparatus according to any of claims 2 to 5, in which a processing module (24a, 24b, 24c) comprises a processor (56) having an RMII interface and a buffer (60), the buffer (60) comprising means to clock received data into the buffer (60) in dependence upon a received clock signal (51) and to provide said data to the processor (60) in dependence upon a clock signal generated by said processor.

7. An apparatus according to claim 1, in which the network specific information comprises address information.

8. An apparatus according to any preceding claim , in which each of the respective processors (82a, 82b) stores network specific information for each of said processing modules (24a, 24b, 24c).

9. A method for connecting processing modules in an apparatus for industrial process control comprising:
connecting each of a plurality of replicated processing modules (24a, 24b, 24c) for receiving replicated sensor input data and for producing output data to another one of said plurality of replicated processing modules (24a, 24b, 24c) via respective dedicated connections without PHY chips; and
further comprising slotting each of the plurality of replicated processing modules (24a, 24b, 24c) into a backplane (24), the backplane comprising a respective processor (82a, 82b) for each of said plurality of replicated processor modules (24a, 24b, 24c), and storing at each respective processor (82a, 82b) network specific information for at least one of said plurality of replicated processing modules (24a, 24b, 24c).

10. A method according to claim 9, wherein connecting each of said plurality of replicated processing modules (24a, 24b, 24c) to another one of said plurality of replicated processing modules (24a, 24b, 24c) via a dedicated connection comprises connecting said processing modules via an RMII interface.

11. A method according to claim 10, comprising connecting each of said plurality of replicated processing modules (24a, 24b, 24c) so that each of said plurality of replicated processing modules (24a, 24b, 24c) sends and receives RMII signals via an FPGA.

12. A method according to any one of claims 9 to 11, wherein connecting each of a plurality of replicated processing modules (24a, 24b, 24c) to another of said plurality of replicated processing modules (24a, 24b, 24c) comprises connecting respective processors (56) of each replicated processing module (24a, 24b, 24c), each processor (56) having an RMII interface and each replicated processing module (24a, 24b, 24c) having means (58) for generating a differential signal for transmission from an RMII signal received from said processor (56).

13. A method according to any one of claims 9 to 12, in which each of said replicated processing modules (24a, 24b, 24c) comprises a processor (56) having an RMII interface and a buffer (60), the buffer (60) comprising means to clock received data into the buffer (60) in dependence upon a received clock signal (51) and to provide said data to the processor (60) in dependence upon a clock signal generated by said processor (56).

## Patentansprüche

1. Vorrichtung zur industriellen Prozesssteuerung, umfassend:
mindestens ein Verarbeitungsmodul (24a, 24b, 24c) zum Empfangen von Sensoreingangsdaten und zum Erzeugen von Ausgangsdaten, worin das mindestens eine Verarbeitungsmodul (24a, 24b, 24c) über eine festgeschaltete Verbindung ohne PHY-Chips mit einem anderen Verarbeitungsmodul (24a, 24b, 24c) verbunden ist,
worin das mindestens eine Verarbeitungsmodul (24a, 24b, 24c) dafür eingerichtet ist, in eine Rückwandplatine (24) gesteckt zu werden, und die Rückwandplatine einen jeweiligen Prozessor (82a, 82b) für jedes Verarbeitungsmodul (24a, 24b, 24c) umfasst, wobei jeder jeweilige Prozessor (82a, 82b) einen Speicher aufweist, der netzwerkspezifische Information für mindestens eines der Verarbeitungsmodule (24a, 24b, 24c) speichert.

2. Vorrichtung nach Anspruch 1, bei welcher die festgeschaltete Verbindung eine RMII-Schnittstelle umfasst.

3. Vorrichtung nach Anspruch 2, bei welcher das mindestens eine Verarbeitungsmodul (24a, 24b, 24c) dafür eingerichtet ist, RMII-Signale über ein FPGA zu senden und zu empfangen.

4. Vorrichtung nach Anspruch 2 oder 3, bei welcher das mindestens eine Verarbeitungsmodul (24a, 24b, 24c) einen Prozessor (56) mit einer RMII-Schnittstelle und Mittel (58), um aus einem von dem Prozessor (56) empfangenen RMII-Signal ein Differenzsignal zur Übertragung zu erzeugen, umfasst.

5. Vorrichtung nach Anspruch 2, 3 oder 4, bei welcher das mindestens eine Verarbeitungsmodul (24a, 24b, 24c) einen Prozessor (56) mit einer RMII-Schnittstelle und Mittel (58), um ein Differenzsignal zu empfangen und daraus ein RMII-Signal zum Senden an den Prozessor (56) zu erzeugen, umfasst.

6. Vorrichtung nach einem der Ansprüche 2 bis 5, bei welcher ein Verarbeitungsmodul (24a, 24b, 24c) einen Prozessor (56) mit einer RMII-Schnittstelle und einen Zwischenspeicher (60) umfasst, wobei der Zwischenspeicher (60) Mittel umfasst, um empfangene Daten in Abhängigkeit von einem empfangenen Taktsignal (51) in den Zwischenspeicher (60) zu takten und die Daten in Abhängigkeit von einem durch den Prozessor erzeugten Taktsignal an den Prozessor (60) zu übergeben.

7. Vorrichtung nach Anspruch 1, bei welcher die netzwerkspezifische Information Adressinformation umfasst.

8. Vorrichtung nach einem der vorhergehenden Ansprüche, bei welcher jeder der jeweiligen Prozessoren (82a, 82b) netzwerkspezifische Information für jedes der Verarbeitungsmodule (24a, 24b, 24c) speichert.

9. Verfahren zum Verbinden von Verarbeitungsmodulen in einer Vorrichtung zur industriellen Prozesssteuerung, umfassend:
Verbinden von jedem aus einer Vielzahl von vervielfältigten Verarbeitungsmodulen (24a, 24b, 24c) zum Empfangen vervielfältigter Sensoreingangsdaten und zum Erzeugen von Ausgangsdaten mit einem anderen aus der Vielzahl von vervielfältigten Verarbeitungsmodulen (24a, 24b, 24c), und zwar über jeweilige festgeschaltete Verbindungen ohne PHY-Chips; und
ferner umfassend: Einstecken von jedem aus der Vielzahl von vervielfältigten Verarbeitungsmodulen (24a, 24b, 24c) in eine Rückwandplatine (24), wobei die Rückwandplatine einen jeweiligen Prozessor (82a, 82b) für jedes aus der Vielzahl von vervielfältigten Verarbeitungsmodulen (24a, 24b, 24c) umfasst, und Speichern netzwerkspezifischer Information für mindestens eines aus der Vielzahl von vervielfältigten Verarbeitungsmodulen (24a, 24b, 24c) in jedem jeweiligen Prozessor (82a, 82b).

10. Verfahren nach Anspruch 9, worin das Verbinden von jedem aus der Vielzahl von vervielfältigten Verarbeitungsmodulen (24a, 24b, 24c) mit einem anderen aus der Vielzahl von vervielfältigten Verarbeitungsmodulen (24a, 24b, 24c) über eine festgeschaltete Verbindung umfasst: Verbinden der Verarbeitungsmodule über eine RMII-Schnittstelle.

11. Verfahren nach Anspruch 10, umfassend: Verbinden von jedem aus der Vielzahl von vervielfältigten Verarbeitungsmodulen (24a, 24b, 24c), sodass jedes aus der Vielzahl von vervielfältigten Verarbeitungsmodulen (24a, 24b, 24c) RMII-Signale über ein FPGA sendet und empfängt.

12. Verfahren nach einem der Ansprüche 9 bis 11, worin das Verbinden von jedem aus der Vielzahl von vervielfältigten Verarbeitungsmodulen (24a, 24b, 24c) mit einem anderen aus der Vielzahl von vervielfältigten Verarbeitungsmodulen (24a, 24b, 24c) umfasst: Verbinden jeweiliger Prozessoren (56) jedes vervielfältigten Verarbeitungsmoduls (24a, 24b, 24c), wobei jeder Prozessor (56) eine RMII-Schnittstelle hat und jedes vervielfältigte Verarbeitungsmodul (24a, 24b, 24c) Mittel (58) hat, um aus einem von dem Prozessor (56) empfangenen RMII-Signal ein Differenzsignal zur Übertragung zu erzeugen.

13. Verfahren nach einem der Ansprüche 9 bis 12, in welchem jedes der vervielfältigten Verarbeitungsmodule (24a, 24b, 24c) einen Prozessor (56) mit einer RMII-Schnittstelle und einen Zwischenspeicher (60) umfasst, wobei der Zwischenspeicher (60) Mittel umfasst, um empfangene Daten in Abhängigkeit von einem empfangenen Taktsignal (51) in den Zwischenspeicher (60) zu takten und die Daten in Abhängigkeit von einem durch den Prozessor (60) erzeugten Taktsignal an den Prozessor (56) zu übergeben.

## Revendications

1. Appareil pour commander un procédé industriel comprenant :
au moins un module de traitement (24a, 24b, 24c) destiné à recevoir des données d'entrée de capteur et à produire des données de sortie, dans lequel ledit au moins un module de traitement (24a, 24b, 24c) est connecté à un autre module de traitement (24a, 24b, 24c) par l'intermédiaire d'une connexion dédiée sans faire appel à des puces PHY ;
dans lequel ledit au moins un module de traitement (24a, 24b, 24c) est apte à s'insérer dans une face arrière (24), et la face arrière comprend un processeur (82a, 82b) respectif pour chaque module de traitement (24a, 24b, 24c), chaque processeur (82a, 82b) respectif présentant un stockage stockant des informations spécifiques de réseau pour au moins l'un desdits modules de traitement (24a, 24b, 24c).

2. Appareil selon la revendication 1, dans lequel ladite connexion dédiée comprend une interface RMII.

3. Appareil selon la revendication 2, dans lequel ledit au moins un module de traitement (24a, 24b, 24c) est apte à envoyer et à recevoir des signaux RMII par l'intermédiaire d'un réseau FPGA.

4. Appareil selon la revendication 2 ou 3, dans lequel ledit au moins un module de traitement (24a, 24b, 24c) comprend un processeur (56) présentant une interface RMII et un moyen (58) permettant de générer un signal différentiel à transmettre à partir d'un signal RMII reçu en provenance dudit processeur (56).

5. Appareil selon la revendication 2, 3 ou 4, dans lequel ledit au moins un module de traitement (24a, 24b, 24c) comprend un processeur (56) présentant une interface RMII et un moyen (58) permettant de recevoir un signal différentiel et de générer, à partir de celui-ci, un signal RMII à envoyer audit processeur (56).

6. Appareil selon l'une quelconque des revendications 2 à 5, dans lequel un module de traitement (24a, 24b, 24c) comprend un processeur (56) présentant une interface RMII et une mémoire tampon (60), la mémoire tampon (60) comprenant un moyen pour cadencer des données reçues dans la mémoire tampon (60), en fonction d'un signal d'horloge (51) reçu, et pour fournir lesdites données au processeur (60) en fonction d'un signal d'horloge généré par ledit processeur.

7. Appareil selon la revendication 1, dans lequel les informations spécifiques de réseau comportent des informations d'adresse.

8. Appareil selon l'une quelconque des revendications précédentes, dans lequel chacun des processeurs (82a, 82b) respectifs stocke des informations spécifiques de réseau pour chacun desdits modules de traitement (24a, 24b, 24c).

9. Procédé de connexion de modules de traitement dans un appareil pour commander un procédé industriel, comprenant l'étape ci-dessous consistant à :
connecter chaque module d'une pluralité de modules de traitement (24a, 24b, 24c) répliqués, en vue de recevoir des données d'entrée de capteur répliquées et de produire des données de sortie, à un autre module de ladite pluralité de modules de traitement (24a, 24b, 24c) répliqués, par l'intermédiaire de connexions dédiées respectives, sans faire appel à des puces PHY ; et
comprenant en outre l'étape consistant à insérer chaque module de la pluralité de modules de traitement (24a, 24b, 24c) répliqués, dans une face arrière (24), la face arrière comprenant un processeur (82a, 82b) respectif pour chaque module de ladite pluralité de modules de traitement (24a, 24b, 24c) répliqués, et à stocker, au niveau de chaque processeur (82a, 82b) respectif, des informations spécifiques de réseau pour au moins un module de ladite pluralité de modules de traitement répliqués (24a, 24b, 24c).

10. Procédé selon la revendication 9, dans lequel l'étape consistant à connecter chaque module de ladite pluralité de modules de traitement (24a, 24b, 24c) répliqués, à un autre module de ladite pluralité de modules de traitement (24a, 24b, 24c) répliqués, par l'intermédiaire d'une connexion dédiée, consiste à connecter lesdits modules de traitement par l'intermédiaire d'une interface RMII.

11. Procédé selon la revendication 10, comprenant l'étape consistant à connecter chaque module de ladite pluralité de modules de traitement (24a, 24b, 24c) répliqués, de sorte que chaque module de ladite pluralité de modules de traitement (24a, 24b, 24c) répliqués envoie et reçoit des signaux RMII par l'intermédiaire d'un réseau FPGA.

12. Procédé selon l'une quelconque des revendications 9 à 11, dans lequel l'étape consistant à connecter chaque module d'une pluralité de modules de traitement (24a, 24b, 24c) répliqués, à un autre module de ladite pluralité de modules de traitement (24a, 24b, 24c) répliqués, consiste à connecter des processeurs (56) respectifs de chaque module de traitement (24a, 24b, 24c) répliqué, chaque processeur (56) présentant une interface RMII, et chaque module de traitement (24a, 24b, 24c) répliqué présentant un moyen (58) permettant de générer un signal différentiel à transmettre à partir d'un signal RMII reçu en provenance dudit processeur (56).

13. Procédé selon l'une quelconque des revendications 9 à 12, dans lequel chacun desdits modules de traitement (24a, 24b, 24c) répliqués comprend un processeur (56) présentant une interface RMII et une mémoire tampon (60), la mémoire tampon (60) comprenant un moyen pour cadencer des données reçues dans la mémoire tampon (60) en fonction d'un signal d'horloge reçu (51) et pour fournir lesdites données au processeur (60) en fonction d'un signal d'horloge généré par ledit processeur (56).
